# EUROPEAN PATENT APPLICATION

(11) **EP 0 585 813 A2**
(43) Date of publication of application: **09.03.1994**
(21) Application number: 93113655.0
(22) Date of filing: 26.08.1993
(51) Int. Cl.: G06F 15/40

(54) **Data processing apparatus for carrying out process by combining objects**

(30) Priority: 04.09.1992 JP 236641/92
(71) Applicant: FUJITSU LIMITED, Kawasaki-shi, Kanagawa 211 (JP)
(72) Inventor: Ryu, Tadamitsu, c/o FUJITSU LIMITED, Kawasaki-shi, Kanagawa 211 (JP); Ichikawa, Naomi, c/o FUJITSU LIMITED, Kawasaki-shi, Kanagawa 211 (JP); Tojima, Tetsuo c/o Fujitsu Network Engineering Ltd, Kawasaki-shi, Kanagawa 213 (JP); Toyota, Masanobu c/o Fujitsu Network Eng. Ltd., Kawasaki-shi Kanagawa 213 (JP); Adachi, Takeshi c/o Fujitsu Network Eng. Ltd., Kawasaki-shi Kanagawa 213 (JP)
(74) Representative: Ritter und Edler von Fischern, Bernhard, Dipl.-Ing.

(57) **Abstract**

A data processing apparatus executes a desired process by naming a single processing unit and/or a combination of single processing units as an object and combining such objects. The data processing unit includes a parts attribute file (205) storing the object as an object part (206) using entity data forming the object and meta data describing nature of the object, and an object management unit (220) communicating with the object part (206) in the parts attribute file (205) to execute the desired process. The object part (206) is specified within the data processing apparatus by an object command (201). The object command (201) is represented by a code in which a surrogate and an object identification are coupled. The surrogate at least describes hierarchical information of hierarchical classes in which a description related to the meta data are compressed, and the object identification typically describes the instances corresponding to the entity data. The object part (206) is specified within the data processing apparatus by the object command (201), and one or a plurality of object parts are coupled to execute the desired process.

## Description

### BACKGROUND OF THE INVENTION

The present invention generally relates to data processing apparatuses, and more particularly to a data processing apparatus which extracts individual objects by an object management unit and carries out a process by appropriately combining the individual objects.

Conventionally, there is a known system which stores individual user data in a user data database and manages the individual user data by a database management system (DBMS).

On the other hand, there is also a known system which is provided with a meta data database that describes the nature and the like of (that is, meta data related to) the individual user data managed by the DBMS, and manages the meta data by a data dictionary and directory system (DD/DS).

In the above described systems, the user data managed by the DBMS and the metal data managed by the DD/DS are conventionally specified by sequential numbers or the like indicating the data sequence, for example. For example, an object identification (ID) is added to the user data managed by the DBMS, and the object ID was normally assigned sequential numbers.

Of course, instead of simply using sequential numbers or codes which do not have a special meaning for the object ID which is added to the user data and the meta data, it was possible to describe the meaning of the user data and the meta data by the object ID. But in this case, the object ID was simply added to the user data alone or to the meta data alone.

On the other hand, it is conceivable to couple the individual user data (entity data) of the user data database managed by the DBMS and the individual meta data of the meta data database managed by the DD/DS, and to treat these data as object parts.

When treating such data as object parts, the objects range from a minimum scale object called a primitive object to a capsule object which is a successively compositive, an event object, a system object and the like. For this reason, the objects which are treated become extremely complex and compositive. As a result, for a given object, it may only be possible for the direct creator to know the actual nature of this object.

In view of the above, with respect to the entity data and the meta data forming the object part, the following information is written in the meta data. In other words, a description of the entity data, such as the name and comment, a significant data model having a significance to a third party, a general flow chart, a detailed flow chart, a source program and the like are written in the meta data.

Accordingly, the object part in general has a large amount of information, and it is desirable that a name is given to the object part to concisely describe the contents of the object part.

### SUMMARY OF THE INVENTION

Accordingly, it is a general object of the present invention to provide a novel and useful data processing apparatus in which the above described desires have been satisfied.

More particularly, the present invention provides a data processing apparatus which gives an object part related to objects which are compositive a name which can describe the contents of the object part, and enables access to the object part by the given name.

Another and more specific object of the present invention is to provide a data processing apparatus which executes a desired process by naming a single processing unit and/or a combination of single processing units as an object and combining such objects, comprising a parts attribute file storing the object as an object part using entity data forming the object and meta data describing nature of the object, and an object management unit communicating with the object part in the parts attribute file to execute the desired process, where the object part is specified within the data processing apparatus by an object command, the object command is represented by a code in which a surrogate and an object identification are coupled, the surrogate at least describes hierarchical information of hierarchical classes in which a description related to the meta data are compressed, the object identification typically describes the instances corresponding to the entity data, the object part is specified within the data processing apparatus by the object command, and one or a plurality of object parts are coupled to execute the desired process. According to the data processing apparatus of the present invention, the entity data and the meta data can be treated as a coupled object part with respect to the objects which are integrated in a complex manner. In addition, the surrogate is described within the object command, as a substitute for the meta data, where the object command gives the name of the object part. As a result, it becomes relatively easy to judge from the object command what the contents of the individual objects are.

Other objects and further features of the present invention will be apparent from the following detailed description when read in conjunction with the accompanying drawings.

### BRIEF DESCRIPTION OF THE DRAWINGS

FIG.1 is a diagram for explaining the operating principle of the present invention;
FIG.2 in parts (A) and (B) is a diagram for explaining an "is-a" hierarchy;
FIG.3 is a flow chart for explaining decoding process in the "is-a" hierarchy;
FIG.4 in parts (A) and (B) is a diagram for explaining a "part-of" hierarchy;
FIG.5 is a diagram for explaining a model forming with respect to departments of a company;
FIG.6 is a diagram showing FIG.5 in an abstract form;
FIG.7 in parts (A), (B) and (C) is a diagram for explaining a capsule;
FIG.8 is a diagram for explaining an object as a model;
FIG.9 is a diagram for explaining the functions of the object as the model;
FIG.10 is a diagram for explaining a process of treating the object;
FIG.11 is a system block diagram showing the structure of a database system;
FIG.12 is a diagram for explaining a part of the operation of a dynamic object processor;
FIG.13 is a system block diagram showing the structure of a terminal station used in an embodiment of the data processing apparatus according to the present invention; and
FIG.14 in parts (A), (B) and (C) is a diagram for explaining the advantages of forming objects as capsules.

### DESCRIPTION OF THE PREFERRED EMBODIMENTS

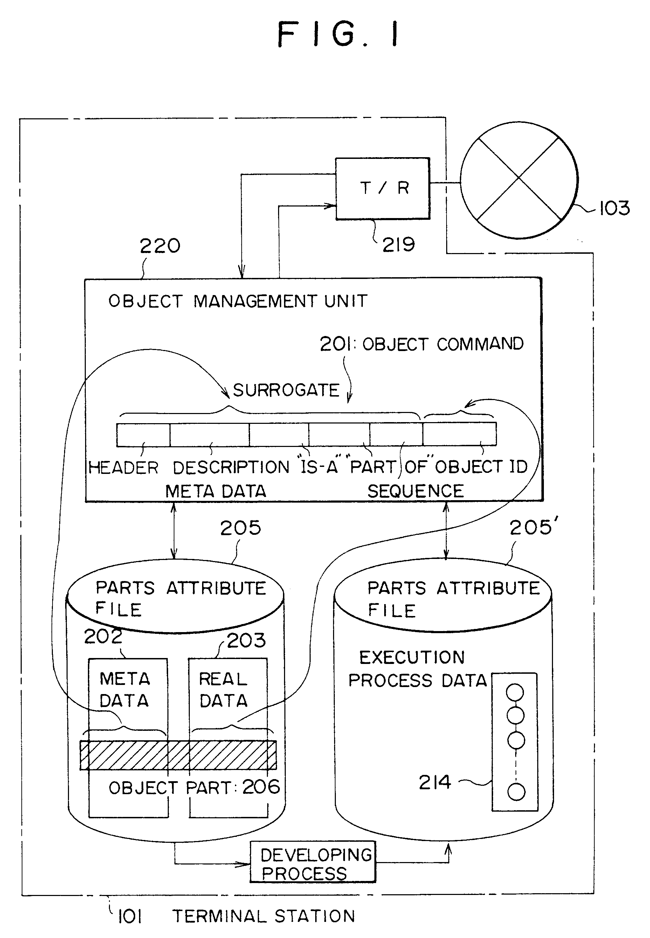

First, a description will be given of the operating principle of the present invention, by referring to FIG.1. In FIG.1, a terminal station 101 forms a data processing apparatus. A communication between the terminal station 101 and another terminal station (not shown) is made via a local area network (LAN) or a switched circuit 103.

The terminal station 101 generally includes parts attribute files 205 and 205', a transmitter/receiver 219, and an object management unit 220. The parts attribute file 205 includes meta data 202, real data 203, and object parts 206. The parts attribute file 205' is the same as the parts attribute file 205 and includes an execution process data 214. the execution process data 214 is obtained by compiling one or a combination of the object parts and developing the compiled result in a form suited for the actual execution process.

An object command 201 in the object management unit 220 is given as a name for specifying the object part 206. The object command 201 is generally divided into a surrogate and an object ID. The surrogate is made up of parts (i) through (vi) described hereunder.
(i) Header: The header specifies the byte from which predetermined information starts and the number of bytes in which the predetermined information exists. The predetermined information includes a descriptive region which will be described later, an "is-a" hierarchy, a "part-of" hierarchy, a sequence and the like.
(ii) Descriptive region: The descriptive region is a summary of the description related to the object, and the meta data in its original sense with respect to the object is written in a compressed form. For example, a part corresponding to the description such as "who made" and "which version" is compressed and written with respect to the object.
(iii) "Is-a" hierarchy: In the case of a description "a dog is an animal", a hierarchical relationship is used by positioning "dog" in a lower hierarchy as opposed to "animal" in a higher hierarchy, so as to describe the relative position of the dog. In other words, in the "is-a" hierarchy, "dog" and the like of the lower hierarchy exist with respect to "animal" in the higher hierarchy.
(iv) "Part-of" hierarchy: For example, "Illinois", "Texas" and "California" form a part of "U.S.A.". A relationship between "Illinois", for example, which forms a part of "U.S.A.", and "U.S.A." is described as a "part-of" hierarchy.
(v) Sequence: A composite object is a complex combination of smaller objects. The sequence describes in a compressed form a part which specifies the execution sequence (including branching) of the group of smaller objects.
(vi) Object ID: The same ID which is conventionally added to the data stored in the user data database is used as the object ID.

The object management unit 220 has functions such as generating a new object part 206 within the parts attribute file 205, correcting and deleting existing object parts, integrating a plurality of object parts into a single object part, and dividing a single object part into a plurality of object parts. In addition, the object management unit 220 also has a function of communicating with a plurality of objects and carrying out a process which is appropriate for the desired processing target by assigning a processing sequence to the individual objects, that is, by ordering the individual objects.

When carrying out the various kinds of processes described above, the object management unit 220 specifies the individual object parts by the object command 201.

The compiling is made if necessary with respect to the group of object parts which are ordered in the above described manner or with respect to the individual object parts, so as to generate the execution process data 214. The execution process data 214 is used when carrying out a data processing within the terminal station 101 or making a communication with another terminal station via the LAN or switched circuit 103. Since the object parts are compiled, the file access is minimized and the data processing or the like can be carried out at a high speed.

Next, a description will be given of an embodiment of the data processing apparatus according to the present invention.

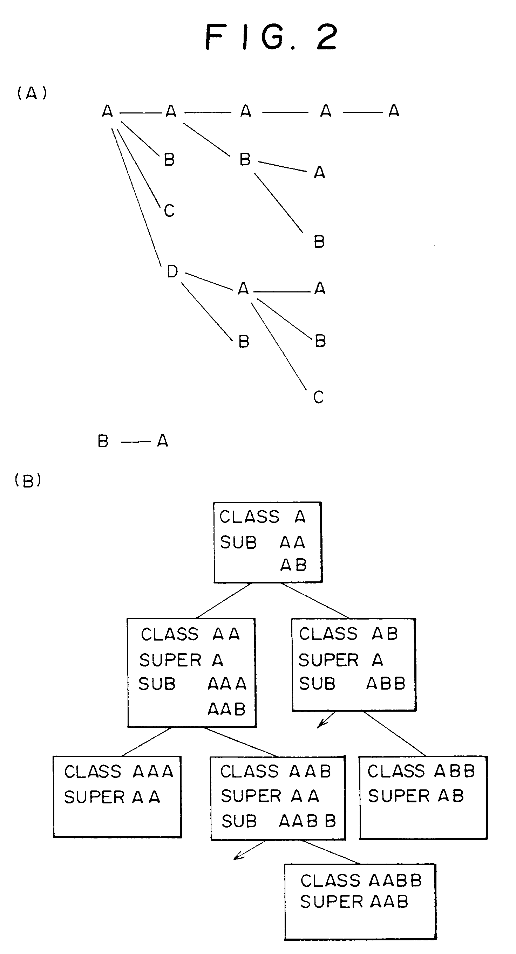

FIG.2 is a diagram for explaining the "is-a" hierarchy.

In FIG.2 (A), hierarchical classes are described such that (i) symbols A and B exist in an uppermost class, (ii) symbols A, B, C and D exist in a second class belonging to the symbol A of the uppermost class, (iii) symbols A and B exist in a third class belonging to the symbol A of the second class, (iv) a symbol A exists in a fourth class belonging to the symbol A of the third class, (v) a symbol A exists in a fifth class belonging to the symbol A of the fourth class, (vi) symbols A and B exist in the fourth class belonging to the symbol B of the third class, (vii) symbols A and B exist in the third class belonging to the symbol D of the second class, and (viii) symbols A, B, C and D exist in a fourth class belonging to the symbol A of the third class following the symbol D of the second class.

FIG.2 (B) shows a structure for describing the hierarchical classes shown in FIG.2 (A). A superclass viewed from itself and a subclass viewed from itself are described together in correspondence with each class name, so as to clarify the position within the hierarchical relationship.

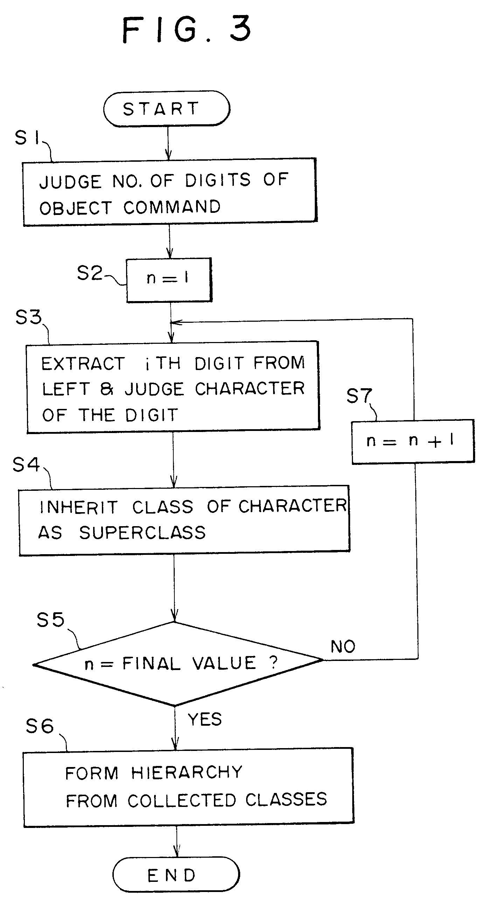

FIG.3 is a flow chart for explaining a decoding process in the "is-a" hierarchy.

In FIG.3, given n digits amounting to the "is-a" procedure of the object command, a step S1 judges the number n of digits, and a step S2 initially sets n to n=1. A step S3 successively obtains the digits from the left, judges the character of the ith digit which is obtained, and collects the characters. A step S4 inherits the class of the characters as a superclass for the processing of the next digit. For example, if the class of the characters is AA, the decoding of the next third class is selected from the characters in the superclass AA. A step S5 decides whether or not the value of n has reached a final value. If the decision result in the step S5 is YES, a step S6 forms a hierarchy from the classes collected up to that time, and the process ends. On the other hand, if the decision result in the step S5 is NO, a step S7 increments n by one, and the process returns to the step S3 so as to process the next digit.

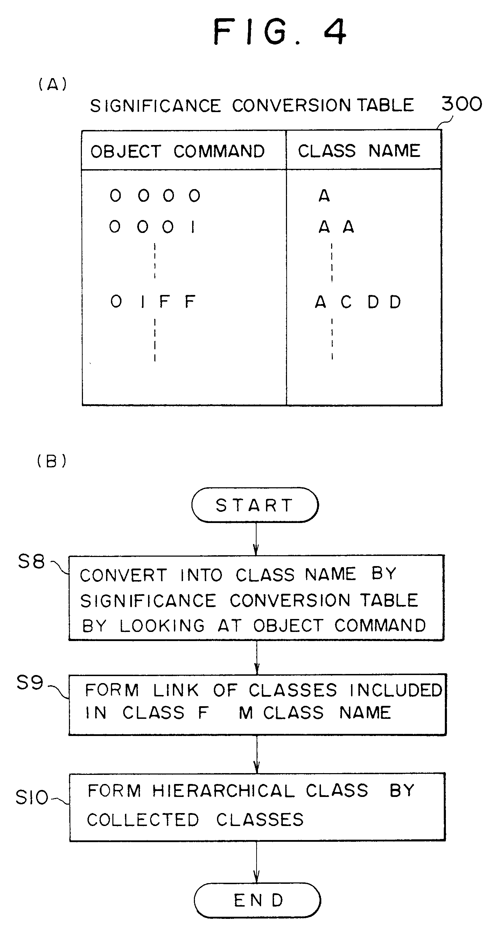

FIG.4 is a diagram for explaining the "part-of" hierarchy.

In FIG.4 (A), possibly existing class names "A", "AA", ..., "ACDD", ... are listed, and "part-of" hierarchy instruction codes "0000", "0001", ..., "01FF", ... of the object command having unique values with respect to the respective class names are assigned to the class names.

For example, if one "part-of" hierarchy instruction code "01FF" is given, the corresponding class name "ACDD" is retrieved. A table which is used for such a retrieval is referred to as a significance conversion table 300. In the "part-of" hierarchy, a plurality of child classes generally exist for one parent class. For this reason, it is impossible to describe the relationship of the parent class and the child class by a concise "class name". Accordingly, if the class name "ACDD" shown in FIG.4 (A) is retrieved, a second corresponding table is retrieved using this class name "ACDD". In other words, the parent class "U.S.A.", for example, is extracted by retrieving the second corresponding table using the class name "ACDD", and the child classes such as "Illinois", "Texas" and "California" are extracted.

FIG.4 (B) shows a flow chart for explaining the process related to FIG.4 (A). In FIG.4 (B), a step S8 retrieves the significance conversion table 300 using the "part-of" hierarchy instruction code of the object command, so as to obtain the corresponding class name. A step S9 retrieves the second corresponding table based on the class name obtained in the step S8, so as to obtain the relationship of (that is, the link between) the parent class and the child classes. A step S10 forms a hierarchical class from the parent class and the child classes which are collected, and the process ends.

Next, a description will be given of particular examples of the relationships of the object, the object command and the object part in the present invention.

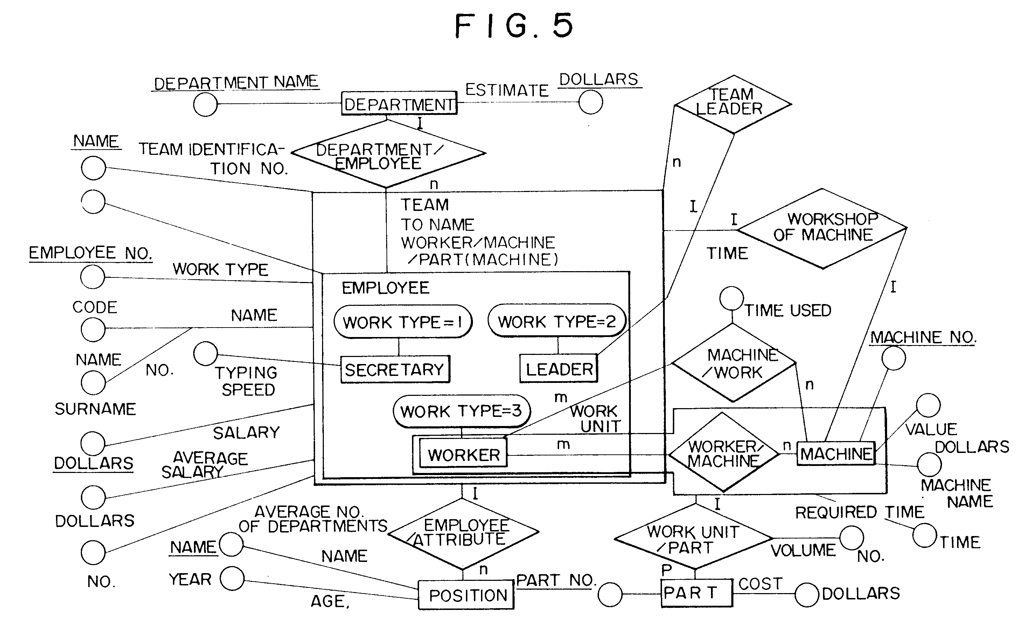

FIG.5 shows a real world, that is, an example of a model for departments of a company. Within a box representing "employees" in FIG.5, there is a "secretary" belonging to a "work type = 1", a "leader" belonging to a "work type = 2", and a "worker" belonging to a "work type = 3". A box representing "employees" belongs to a box representing a "team".

The "leader" is related to the "team" under the relationship "team leader". In addition, the "worker" is related to a "machine" under the relationship "worker/machine" within the box representing "work unit".

The "team" and the "machine" are related under the relationship "machine/workshop". The "worker" and the "machine" are related under the relationship "machine/worker". In addition, the "employee" and the "department/employee" are related under the relationship "department".

Furthermore, the "employee" and the "position" are related under the relationship "employee/attribute". The "work unit" and the "part" are related under the relationship "work unit/part".

The following relationships also exist.
(1) The "department" is related to the object "department name" and the object "dollars".
(2) The "team" is related to the object "name" by a team identification number, related to the object "employee number" by the work type, related to the object "code name" and the object "surname" by the name, related to the object "dollars" by the salary, related to the object "dollars" by the average salary, and related to the object "number" by the average number of departments.
(3) The "secretary" is related to the object "number" by the typing speed.
(4) The "position" is related to the object "name" by the name, and related to the object "year" by the age.
(5) The "part" is related to the object "part number" and the object "dollars".
(6) The "work unit/part" is related to the object "number" by the volume.
(7) The "work unit" is related to the object "time" by the required time.
(8) The "machine" is related to the object "machine number", the object "dollars" and the object "machine name".
(9) The "machine/work" is related to the object "time" by the time used.

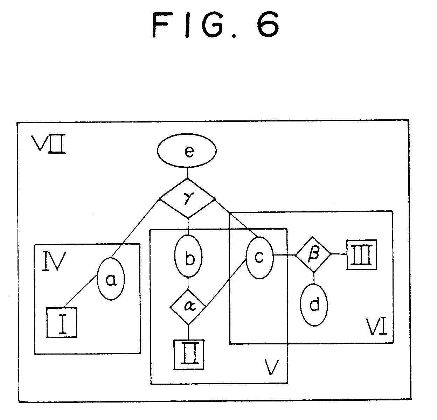

The model shown in FIG.5 can generally be represented as shown in FIG.6 if the "behavior" (or method) is indicated by a circular box, the "data" is indicated by a rectangular box, and the "relationship" is indicated by a rhombic box. In other words, (1) a method "a" and a data "I" are combined and function as one larger data "IV", (2) methods "b" and "c" are related to a data "II" by a relationship "α" and function as one larger data "V", (3) methods "c" and "d" are related to a data "III" by a relationship "β" and function as one larger data "VI", and (4) a method "e" are related to data "IV" and "V" by a relationship "τ" and function as still a larger data "VII". In other words, the behaviors (or methods) are gathered and represented as a larger group.

Each circular box, rectangular box and rhombic box shown in FIG.6 can be treated as an individual object.

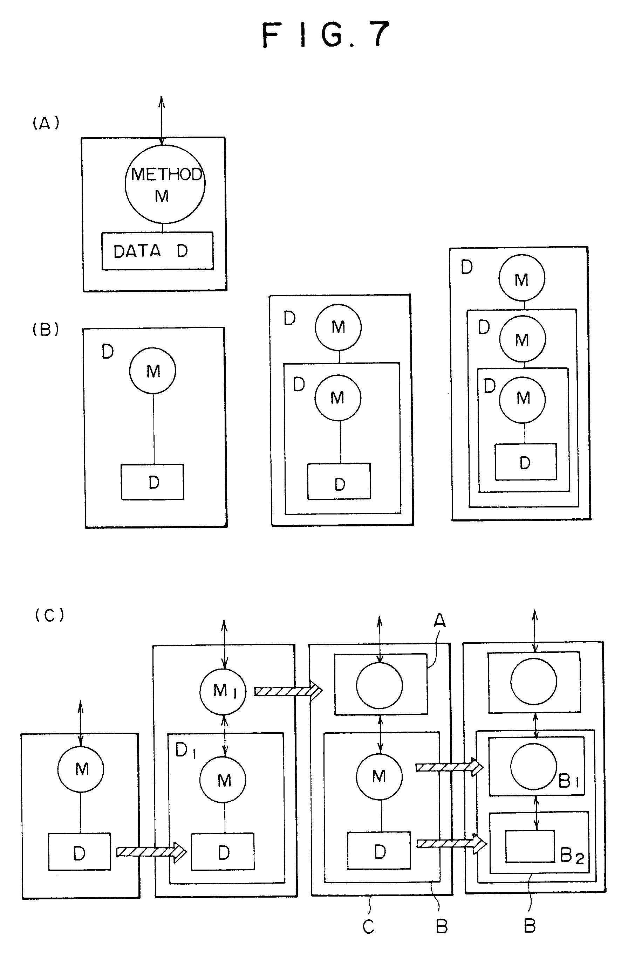

The forming of a capsule shown in FIG.7 (A) will now be considered for a collection of the method "a" and the data "I" shown in FIG.6. In FIG.7 (A), an opening is formed at the top of the capsule to indicate that a message communication can be made. If this opening of the capsule were closed as shown on the left side of FIG.7 (B), such a capsule would then correspond to the data "IV" which is a collection of the method "a" and the data "I" in FIG.6. If a composite object is obtained by adding a method "M" to the data "D" (capsule) shown on the left side of FIG.7 (B), the data shown at the central part of FIG.7 (B) is obtained. Further, if a composite object is obtained by further adding a method to the data shown at the central part of FIG.7 (B), the data shown on the right side of FIG.7 (B) is obtained. Hence, FIG.7 (B) shows the formation of composite objects by successively adding methods.

The formation of the composite objects is not limited to that shown in FIG.7 (B). For example, the composite objects may be formed as shown in FIG.7 (C). In FIG.7 (C), the data "D" of the object shown on the leftmost side is replaced by an object which is made up of a method and a data, as shown on the second leftmost side. In this case, a message passing is required between a method "M1" and a data "D1", and the method "M1" becomes one object as shown on the second rightmost side in FIG.7 (C). As a result, objects "A" and "B" exist within an object "C", and the message passing exists between the objects "A" and "B".

Furthermore, if the method "M" of the object "B" is replaced by an object "B1" and the data "D" of the object "B" is replaced by an object "B2", both the object "B1" and "B2" exist within the object "B" and the message passing exists between the objects "B1" and "B2" as shown on the rightmost side in FIG.7 (C).

Therefore, the composite objects are formed by successively combining the objects. For example, the so-called primitive objects which will be described later are combined to form a capsule object, the capsule objects are combined to form an event object, and the event objects are combined to form a system object.

The data "D" described above is generally made up of a plurality of process units which are the subject of the processing. On the other hand, the method "M" may be considered as information or information group instructing how the plurality of processing units are to be utilized. The object which is represented in FIG.7 is a "processing unit" which is treated as an individual "processing unit" or a collection of "individual processing units".

As shown in FIG.6, the individual objects "I", "II" and "III" form a part of the larger objects "IV", "V" and "VI". In addition, the objects "IV", "V" and "VI" form a part of still a larger object "VII". In other words, the objects "IV", "V" and "VI" are in an "is-a" relationship or a "part-of" relationship with the object "VII" when viewed from the object "VII".

If the objects "I", "II" and "III" are regarded as minimum units, these objects "I", "II" and "III" may be said to be primitive objects. The capsule object is formed by a collection of such primitive objects. The event object is formed by a collection of such capsule objects. Furthermore, a still larger system object is formed by a collection of such event objects.

The objects described above which are made up of a collection of smaller objects are respectively referred to as a composite object. The primitive object is included in the concept of the composite object. However, the primitive object is an object of the minimum unit as described above. For this reason, when a reference is generally made to a "composite object" or an "object", it is better to exclude the primitive object which exists by itself and cannot be decomposed further.

The object in the capsule form is generally made up of the composite objects described above in the capsule form.

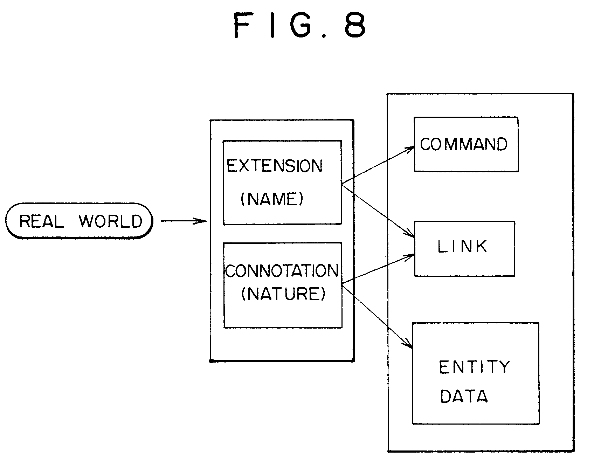

The individual objects can be represented by the following model. That is, FIG.8 is a diagram for explaining the object as a model.

A thing of the real world, such as a photograph, can be specified by the name which describes the photograph, and the nature of the photograph. The nature of the photograph indicates what kind of picture the photograph is, such as the person who took the picture and the time when the picture was taken. Hence, the photograph can be represented by a model using (i) the command which is used as the name specifying the photograph, (ii) the actual picture (entity data) of the photograph formed by black and white dots, and (iii) the link which describes the nature of the photograph, the location where the actual picture is stored, the relationship of the people in the photograph and the like.

The individual object described above can also be represented by a model such as that shown in FIG.8 using the command, the link and the entity data.

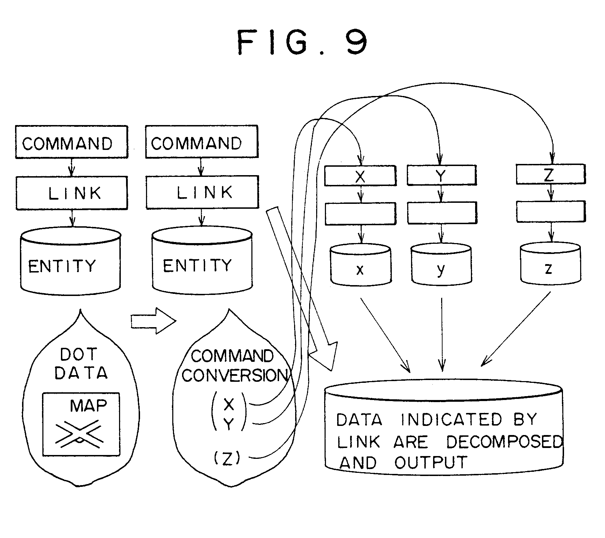

FIG.9 is a diagram for explaining the functions of the object as a model. As shown on the left side of FIG.9, the object can be described using the command, the link and the entity data. It may be regarded that the dot data shown in FIG.9 are given to the entity data. The capsule object, the event object and the system object are generally given a description specifying other objects X, Y and Z as the entity data, related to these other objects X, Y and Z, and use entity data x, y and z of these other objects X, Y and Z as shown on the right side of FIG.9.

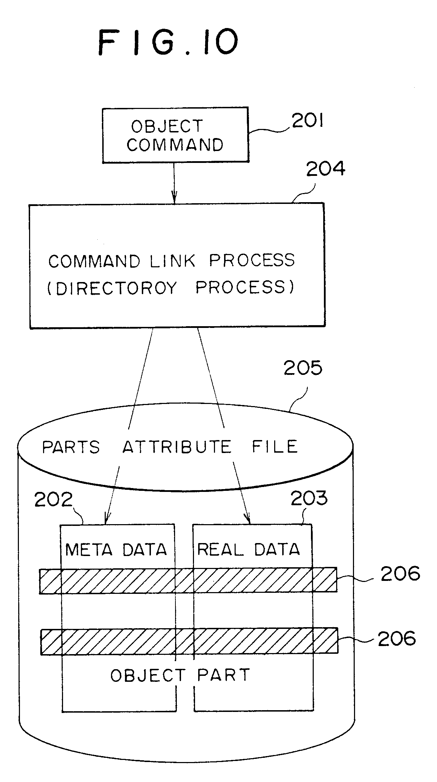

FIG.10 is a diagram for explaining the processing of treating the object. An object command 201 shown in FIG.10 is the same as the commands shown in FIGS.8 and 9. In other words, the object command 201 is the name for specifying the object. A meta data 202 shown in FIG.10 corresponds to the links shown in FIGS.8 and 9. That is, the meta data 202 is a data (description of real data) describing the real data with significance, such as the name, comment and command. In addition, the "is-a" hierarchy relationship, the "part-of" hierarchy relationship, and the sequential relationship between the objects are described in the meta data 202. The comment is a description which significantly describes what the real data is when describing the real data. In other words, the comment may take the form of a general flow chart, a detailed flow chart or a source program. An entity data (real data) 203 shown in FIG.10 corresponds to the entity data shown in FIGS.8 and 9, and the program for executing the process is treated as one real data.

A command/link processor 204 shown in FIG.10 is also referred to as a directory processor. When one new object is formed, a command (also referred to as an object command) which is the name of this object is set. In addition, storage locations for the real data 203 and the meta data 202 are allocated, and a command/link table is formed. In this case, the type of object is determined, thereby determining the size of the object. Then, measures are taken so that a combination of the meta data 202 and the real data (entity data) 203 can by input and output using the command/link table. Further, the input/output process is carried out. The above combination of the meta data 202 and the real data 203 will be named an object part 206. The object part 206 can be specified using the object command.

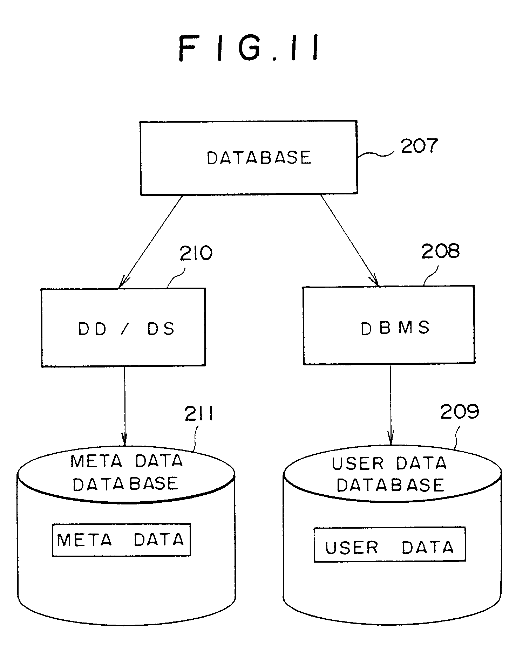

FIG.11 shows the structure of a database system. The database system shown in FIG.11 includes a database 207, a database management system (DBMS) 208, a user data database 209, a data dictionary and directory system (DD/DS) 210, and a meta data database 211. The structure itself of such a database system is known.

The user data database 209 collectively stores the user data. The DBMS 208 centrally controls the user data database 209, and carries out processes such as generation, deletion, correction and input/output with respect to the user data.

On the other hand, as the number of individual user data increases and the volume of the individual user data increases, the meta data are formed to give descriptions such as explaining the role of the individual user data. The meta data database 211 collectively stores the meta data. The DD/DS 208 centrally controls the meta data database 211.

The object part 206 in the parts attribute file 205 shown in FIG.10 may be regarded as a collection of the user data within the user data database 209 shown in FIG.11 and the meta data within the meta data database 211 shown in FIG.11. Of course, in the conventional database system, the DBMS 208 and the DD/DS 210 shown in FIG.11 operate independently, and accesses to the contents of the user data database 209 and the contents of the meta data database 211 are made independently. But in the case shown in FIG.10, the real data 203 and the meta data 202 are combined and treated as one object part 206 by specifying the object part 206 by the object command.

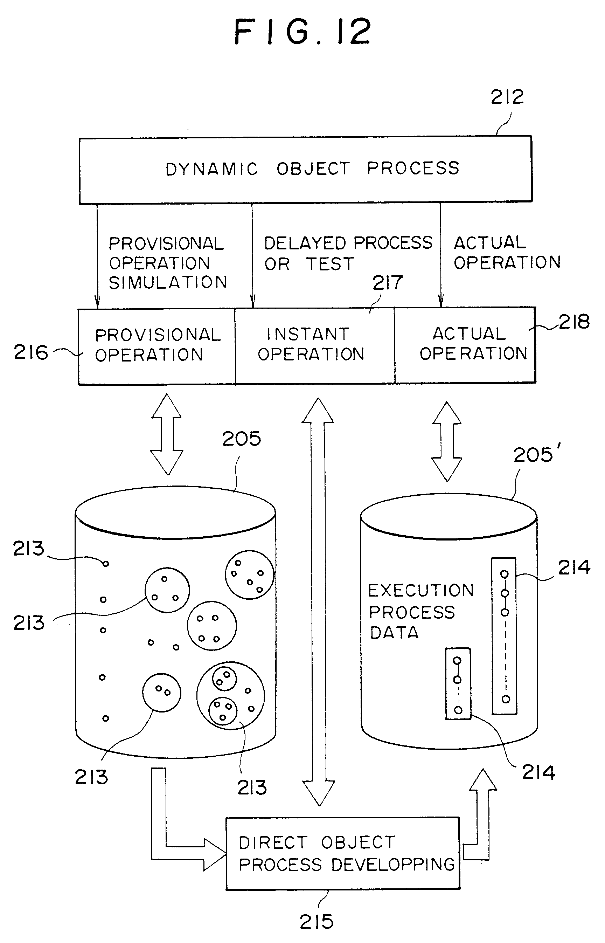

FIG.12 is a diagram for explaining a part of the operation of a dynamic object processor. A dynamic object processor 212 shown in FIG.12 has a provisional operation mode 216 for making a simulation or the like, an instant operation mode 217 for making a test or the like, and an actual operation mode 218 for making a data processing or a communication with another terminal.

The parts attribute file 205 shown in FIG.12 corresponds to the parts attribute file 205 shown in FIG.10. On the other hand, the parts attribute file 205' shown in FIG.12 stores the execution process data 214 which is obtained by compiling all or a part of the contents of the parts attribute file 205 into a form that is suited for executing the actual operation at a high speed. The execution process data 214 for the case of an object program for executing the process is generally made up of several tens to several hundreds of steps which are coupled in series in the processing sequence of the processing units.

Objects 213 shown in FIG.12 are the objects described above. More particularly, the objects 213 may generally include the primitive object, the capsule object, the event object and the system object. As described above in conjunction with FIG.10, it may be regarded that the objects 213 are stored in the form of object parts 216 so that the object parts 216 can be specified by the corresponding object commands.

A direct object process developing process 215 shown in FIG.12 develops the individual objects 213 or, develops a plurality of objects 213 in a collective manner, and obtains the execution process data 214.

As described above in conjunction with FIG.7, the data are generally gathered into a process unit in the form of a composite object, and becomes a unit which displays a behavior for executing a process which has a certain target. Such composite objects are stored in the parts attribute file 205 in the form of the object parts 206 which are specified by the object commands 201 as shown in FIG.10.

When generating a new processing function, a new object is generated so that the new processing function can be obtained. Alternatively, existing objects are coupled depending on the common target, so as to form a new object which can exhibit the new processing function. The above new object is prepared as one of the object parts 206.

When the object is generated, a simulation is made to determined whether or not the object actually functions correctly. Alternatively, a provisional operation may be carried out with respect to the object for which the simulation has been made. The above processes correspond to the provisional operation mode 216 shown in FIG.12. The dynamic object processor 212 utilizes the contents of the parts attribute file 205, and a simulation of a desired operation is made.

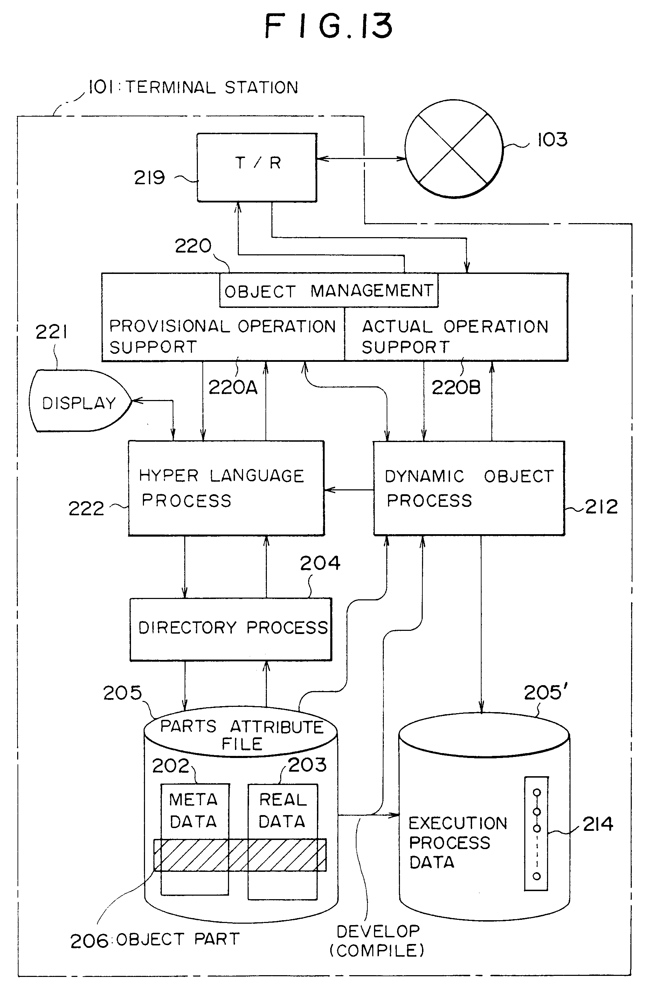

The object 213 or the object group which operates normally as a result of the provisional operation mode 216 is developed into the execution process data 214, that is, compiled into one execution process data 214, because a large amount of communications would be required with the object management unit 220 shown in FIG.13 and the processing speed would be slow if not developed. This developing process is carried out by the direct object process developing process 215 shown in FIG.12, and the execution process data 214 is stored in the parts attribute file 205'.

In the dynamic object processor 212, a delayed process is temporarily made with respect to a predetermined process by utilizing the contents of the parts attribute file 205 or, the direct object process developing process 215 is started to generate the execution process data 214 if a test process or the like needs to be made. In FIG.12, such processes are shown as the instant operation mode 217.

The actual operation mode 218 shown in FIG.12 is a mode in which the actual operation is made using the execution process data 214.

In the meta data within the parts attribute file 205, it may be regarded that there exist the significant data related to the nature of the object, the description instructing the coupled relationship with respect to the object (object indicated by "is-a") of a higher hierarchy when viewed from its own object, and the description instructing the coupled relationship with respect to the object (object indicated by "part-of") group of a lower hierarchy included in its own object.

FIG.13 shows the structure of the terminal station used in the embodiment of the data processing apparatus according to the present invention. In FIG.13, those parts which are the same as those corresponding parts in FIG.1 are designated by the same reference numerals. In FIG.13, the elements 202, 203, 204, 205, 205', 206, 212 and 214 correspond to those shown in FIGS.10 and 12. The terminal station 101 shown in FIG.13 carries out a process using the execution process data 214 or makes a communication with another terminal station (not shown) via the LAN or switched circuit 103.

The transmitter/receiver 219, the object management unit 220, a display 221, a hyper language processor 222 and the like are provided within the terminal station 101 shown in FIG.13.

The directory processor 204 shown in FIG.13 carries out the process described above with reference to FIG.10. In addition, the dynamic object processor 212 shown in FIG.13 carries out the process described above with reference to FIG.12.

A provisional operation support 220A of the object management unit 220 shown in FIG.13 is a support function corresponding to the operation up to the start of the provisional operation mode 216 shown in FIG.12. An actual operation support 220B of the object management unit 220 shown in FIG.13 is a support function corresponding to the operation up to the start of the actual operation mode 218 shown in FIG.12.

The hyper language processor 222 shown in FIG.13 has a "parts display/select" function, and retrieves and outputs from the display 221 an object part which is usable. If a suitable object part does not exist, a part is specified as a new object part by using a "part specify" function. It is possible to generate a class object part by an "attribute set" function, and to generate an instance object part by a "schema function" or the like.

The "part display" function using the display 221 includes (i) content display for outputting names and comments, (ii) display of attribute and schema indicating the content of the object part, and (iii) display of class attribute and instance constant, which are meta data of the object part.

A "parts combining" function of the hyper language processor 222, that is, the function of combining the object parts and obtaining a larger composite object part, includes functions for adding, changing and deleting the attribute related to the class formation and functions for adding, changing and deleting schema related to the instance constant.

A "user image forming" function of the hyper language processor 222 inputs data of the image into a buffer of a "image formation and display" class to form an instance when forming and displaying the image. For this reason, the "user image forming" function corresponds to forming the image class into an instance.

A "provisional operating" function of the hyper language processor 222 temporarily realizes a capsule shown in FIG.7 in a temporary memory by linking a method indicated by the class when the instance receives a message, so as to execute the behavior of the corresponding capsule.

A "part change" function of the hyper language processor 222 changes the object part by changing, adding and deleting the attribute or schema. In addition, a "part registering" function of the hyper language processor 222 registers the object part in the parts attribute file 205 in correspondence with the object command (name of the object part).

The "developing (compiling)" shown in FIG.13 represents the direct object process developing process 215 shown in FIG.12. In the developing process, the development is made to an execution process data 214 which is as large as possible depending on the size of the temporary memory of the data processing apparatus.

The object management unit 220 controls the hyper language processor 222 shown in FIG.13, so as to hold the object part 206 in the parts attribute file 205 as described above. In addition, the object management unit 220 controls the dynamic object processor 212 shown in FIG.12 to carry out operations such as the provisional operation mode 216, the instant operation mode 217 and the actual operation mode 218. In addition, depending on a message reception via the LAN or switched circuit 203, the object management unit 220 starts the instance in the provisional operation mode 216, operates the data processing apparatus by provisionally forming the capsule in the temporary memory, and makes a message transmission based on the result of the processing. Of course, if an execution process data 214 which has already been developed exists, the developed execution process data 214 is executed to make a message transmission to the remote terminal station.

When carrying out the process within the home terminal station 101, the desired object part may not exist within this terminal station 101. In addition, the attribute and/or schema may not exist. In such cases, a learning process is carried out by the home terminal station 101 by entering the missing object part, attribute and/or schema in response to a data transfer which is received from the remote terminal station via the LAN or switched circuit 103.

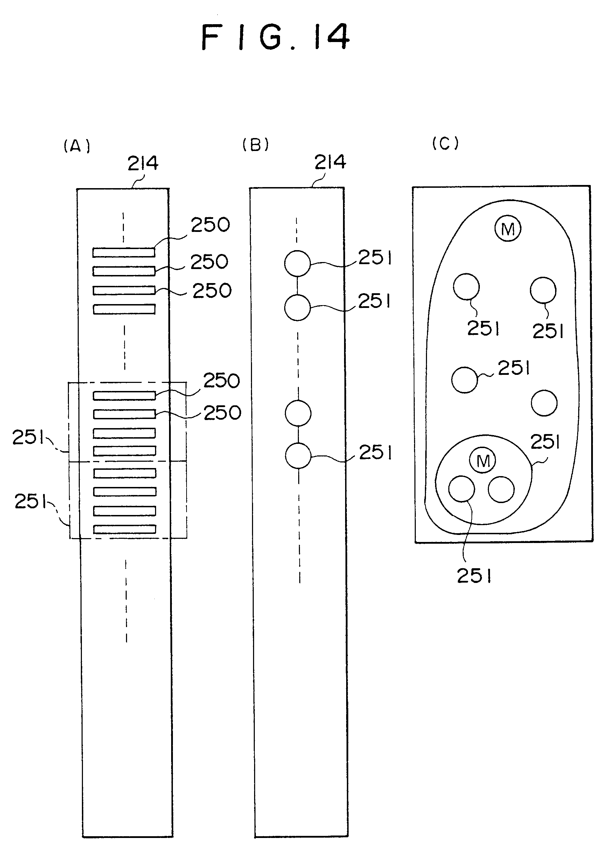

FIG.14 is a diagram for explaining the advantages of forming the objects in the form of the capsule. If the execution process data 214 is taken as an example, the execution process data 214 may be given as a series of commands (or command groups) 250 which are coupled in the processing sequence as shown in FIG.14 (A). An arbitrary number of these commands (or command groups) 250 are combined to form a processing unit 251 which executes a predetermined process, that is, makes a certain behavior.

Accordingly, the execution process data 214 shown in FIG.14 (A) may be regarded as a series of processing units 251 which make certain behaviors and are coupled in the processing sequence as shown in FIG.14 (B). The serialized execution process data 214 shown in FIG.14 (B) as a whole carries out a specific operation. Hence, an execution process data 214 for carrying out another process is given as a different execution process data in which the processing units 251 are coupled in a different combination.

As the existing processing units 251 making different behaviors increase considerably in number, the individual processing units 251 are integrated under a predetermined method "M" as shown in FIG.14 (C) depending on the needs. In this case, it is also possible to carry out the same operation as the execution process data 214 shown in FIG.14 (B).

It may be regarded that the integration of the processing units 251 shown in FIG.14 (C) corresponds to the forming of the capsule described above with reference to FIG.7.

Further, the present invention is not limited to these embodiments, but various variations and modifications may be made without departing from the scope of the present invention.

## Claims

1. A data processing apparatus wherein a desired process is executed by naming a single processing unit and/or a combination of single processing units as an object and combining such objects, said data processing apparatus comprising:
a parts attribute file (205) storing the object as an object part (206) using entity data forming the object and meta data describing nature of the object; and
an object management unit (220) communicating with the object part (206) in said parts attribute file (205) to execute the desired process,
said object part (296) being specified within the data processing apparatus by an object command (201),
said object command (201) being represented by a code in which a surrogate and an object identification are coupled, said surrogate at least describing hierarchical information of hierarchical classes in which a description related to the meta data are compressed, said object identification typically describing the instances corresponding to the entity data,
said object part (206) being specified within the data processing apparatus by said object command (201) , and one or a plurality of object parts being coupled to execute the desired process.

2. The data processing apparatus as claimed in claim 1, characterized in that said surrogate includes:
a header including information instructing positions where various information are described within said surrogate;
a descriptive region including compressed description related to the object;
hierarchical information describing a hierarchical relationship of the object with respect to another object; and
sequence information describing an execution sequence of smaller objects within the object.

3. The data processing apparatus as claimed in claim 1, characterized in that the hierarchical information within said surrogate describes the hierarchical classes by a code sequentially comprising:
a symbol describing one highest class;
a symbol describing one of second highest classes belonging to the highest class;
a symbol describing one of third highest classes belonging to the second highest class; and
a symbol describing one of nth highest classes belonging to a (n-1)th highest class,
where n = 4, ..., m and m is an integer greater than 4.

4. The data processing apparatus as claimed in claim 3, characterized in that:
the symbol of the (i+1)th highest class is extracted from those belonging to the ith highest class after extracting the symbol of the ith highest class when decoding the surrogate of the object command; and
the object part is extracted by combining the object identification to a content specified by the symbol of the highest class, a content specified by the symbol of the second highest class, ..., a content specified by the symbol of the ith highest class, a content specified by the symbol of the (i+1)th highest class, ... and a content specified by the symbol of the nth highest class.

5. The data processing apparatus as claimed in claim 1, characterized in that:
the hierarchical information within the surrogate is described by making a code made up of a predetermined number of digits correspond to each individual class unit forming the hierarchical classes;
a first corresponding table of the code made up of the predetermined number of digits and the individual class units is prepared; and
the object part is extracted by combining information including the object identification with respect to the class unit which is retrieved from the first corresponding table using the code.

6. The data processing apparatus as claimed in claim 5, characterized in that:
a second corresponding table is formed using the class units retrieved from the first corresponding table; and
a parent class and a child class are obtained under a "part-of" hierarchy based on a result which is obtained by retrieving the second corresponding table.
